# EUROPEAN PATENT APPLICATION

(11) **EP 2 096 421 A1**
(43) Date of publication of application: **02.09.2009**
(21) Application number: 08003793.0
(22) Date of filing: 29.02.2008
(51) Int. Cl.: G01J 3/433

(54) **Apparatus and method for spectroscopic measurement of a medium and simultaneous data transmission**

(71) Applicant: SIEMENS AKTIENGESELLSCHAFT, 80333 München (DE)
(72) Inventor: Walewski, Joachim, Dr., 82008 Unterhaching (DE)

(57) **Abstract**

An apparatus for spectroscopic measurement of a medium (6) comprising of at least one transmitter (4) for transmitting a first electromagnetic radiation to said medium (6), wherein an information data signal is modulated on said electromagnetic radiation at least one receiver (3) for reception of a second electromagnetic radiation from said medium (6), where the radiation is generated in response to the first electromagnetic radiation in said medium (6) and for reception of the modulated information data signal, wherein said receiver (3) comprises a data processing unit (8) for evaluating said second electromagnetic radiation and said information data signal.

## Description

### BACKGROUND OF THE INVENTION

The invention relates to an apparatus and a method for spectroscopic measurement of a medium to be investigated such as a fluid or a gas and the simultaneous wireless transmission of data.

In an exemplary spectroscopic measurement system a radiation source, such as a lamp, transmits electromagnetic radiation, such as light, via a medium to be investigated to a receiver, for instance to a photodiode. In general, spectroscopic measurement systems are used to investigate various media, such as fluids or gases. By means of spectroscopic measurements it is, for example, possible to analyze blood samples of patients. In a conventional measuring apparatus a plurality of blood samples provided in a two-dimensional cuvette array can be analyzed in succession. A radiation source or a transmitter, respectively, transmits electromagnetic radiation with a predetermined frequency to an optical deflection device, such as a mirror, that directs the electromagnetic radiation onto one of the blood samples arranged below the device. The optical signal from the sample, e.g. fluorescence or scatter, is collected by a detector. The detector comprises, for example, a photodiode that outputs a signal that is evaluated in order to provide an assay of the blood sample. The two-dimensional cuvette array can carry a plurality of blood samples, which in turn can belong to a number of patients.

A disadvantage of these conventional measuring devices for spectroscopic measurement and analyzing of blood samples is that there is no immediate relation between the received electromagnetic signal and the respective patient from whom the blood sample has been taken. This information is directly related to the position of the sample in the array. I.e., by knowing what the current direction/position of the beam is, one can assign the collected signal to this blood sample and thus a certain patient.

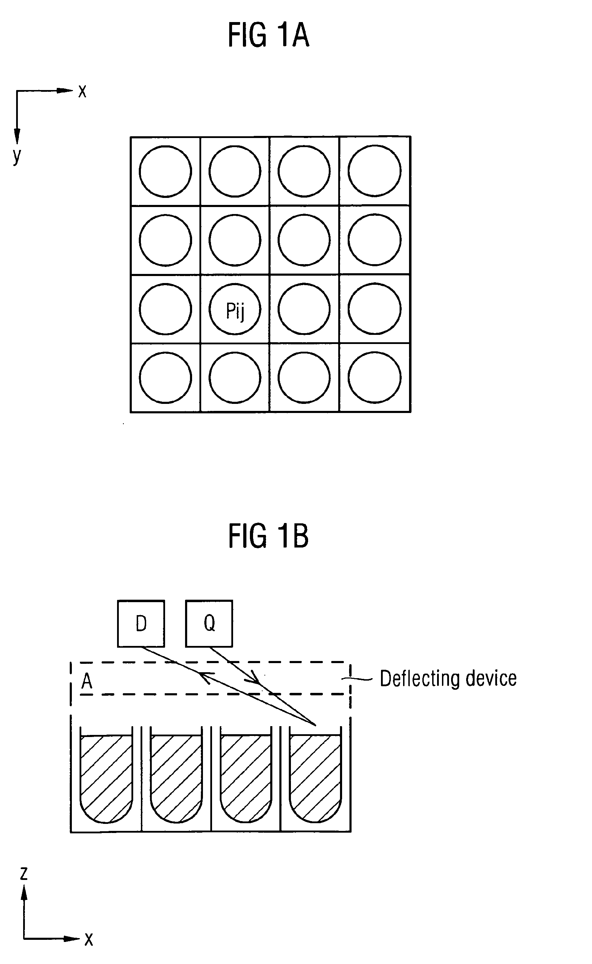

Figures 1A, 1B show a two-dimensional measuring assembly for the in-vitro assay of blood samples Pᵢⱼ, which are provided in a cuvette array. A source Q generates electromagnetic radiation such as light. By means of a deflecting device (not shown here) the radiation is directed to the blood samples Pᵢⱼ and the signal is reaching the reflected to a detector D. By means of the deflecting device it is possible to direct the electromagnetic radiation sequentially to all blood samples and to receive a corresponding electromagnetic radiation for detection. The generated radiation can, for example, be laser light, which stimulates a fluorescent within the blood samples. The transmitted laser ray is focused so that it only excites one sample at a time. By sequentially moving the laser spot to each blood sample each can sequentially be stimulated and hence analyzed.

A disadvantage of the assembly shown in figures 1A, 1B is that transmit time differences or delays can occur because of the extension of the receiving means receiving a plurality of blood samples. For example the light for blood samples positioned at the periphery of the receiving means needs a longer transmission time than for blood samples that are arranged in the centre, i.e. close to the radiation source Q and the detector D. Scanning of the different blood samples can be performed by the measurement system shown in figures 1A, 1B in an asynchron manner. This can lead to confusion or mistakes because a received measurement signal, i. e. an electromagnetic radiation received by the detector D, can be erroneously accorded to a wrong blood sample Pᵢⱼ. A further disadvantage is that a measurement to avoid such mistakes can only be performed at a low speed so that it takes a long time to analyze a plurality of blood samples.

A more severe disadvantage is that the receiving end does not know the current position (ᵢⱼ) of the laser spot. Although the radiation source Q knows the current position of the laser spot, the detector D does not.

Accordingly, it is an objective of the present invention to provide an apparatus and a method that minimize the probability of confusing samples without the need of communication between Q and D and without reliance on time synchronization.

### SUMMARY OF THE INVENTION

The invention provides an apparatus for spectroscopic measurement of a medium comprising
(a) at least one transmitter for transmitting a first electromagnetic radiation to said medium, wherein an information data signal is modulated on said electromagnetic radiation;
(b) at least one receiver for reception of a second electromagnetic radiation from said medium where the second electromagnetic radiation is generated in response to the first electromagnetic radiation in said medium and for reception of the information data modulated onto the signal;
(c) wherein said receiver comprises a data processing unit for evaluating said second electromagnetic radiation and said information data signal.

The transmitter knows the current position of the first electromagnetic radiation, e. g., the current position of a laser spot, and encrypts the current position in the emitted radiation, wherein the encryption is transferred to the emitted signal, such as a fluorescence signal.

Consequently, with the invention according to the present invention, one does not need an additional data channel to transfer the information data signal. Furthermore, the apparatus according to the present invention does not need to rely on a challenging time synchronization.

In an embodiment of the apparatus according to the present invention the electromagnetic radiation comprises a frequency of more than 40 GHz.

In an embodiment of the apparatus according to the present invention the medium is a fluid.

In an embodiment of the apparatus according to the present invention the medium is a body fluid from an organism.

In an embodiment of the apparatus according to the present invention the body fluid is blood.

In an embodiment according to the present invention the medium is a gas.

In an embodiment of the apparatus according to the present invention the medium is exhaust gas of an engine.

In an embodiment of the apparatus according to the present invention the medium is a gas mixture such as air.

In an embodiment of the apparatus according to the present invention the medium comprises a plasma.

In an embodiment according to the present invention the medium is a solid-state body.

In an embodiment of the apparatus according to the present invention the information data signal transmits information data indicative of the medium to be analyzed.

In an embodiment of the apparatus according to the present invention the information data signal transmits information data indicative for the radiation source or the transmitter.

In an embodiment of the apparatus according to the present invention the information data signal comprises a synchronization signal.

In an embodiment of the apparatus according to the present invention a modulator is provided that modulates the information data signal on the first electromagnetic radiation.

In an embodiment of the apparatus according to the present invention a demodulator is provided that demodulates the second received electromagnetic radiation for extracting the information data signal.

In an embodiment of the apparatus according to the present invention the first and the second electromagnetic radiation are of the same kind.

In an embodiment of the apparatus according to the present invention the radiation source and/or the detector are provided in a mobile device.

In an embodiment of the apparatus according to the present invention the first electromagnetic radiation is intensity modulated by the modulator with the information data signal.

In an embodiment of the apparatus according to the present invention the field of the first electromagnetic radiation is amplitude modulated by the modulator with the information data signal.

In an embodiment of the apparatus according to the present invention the first electromagnetic radiation is polarization modulated by the modulator with the information data signal.

In an embodiment of the apparatus according to the present invention the first electromagnetic radiation is phase modulated by the modulator with the information data signal.

In an embodiment of the apparatus according to the present invention the first electromagnetic radiation is frequency modulated by the modulator with the information data signal.

The invention further provides a method for a spectroscopic measuring of a medium comprising the steps of:
(a) transmitting a first electromagnetic radiation to a medium, wherein a information data signal is modulated to said first electromagnetic radiation;
(b) receiving a second electromagnetic radiation from the medium that is generated in the medium in response to the first electromagnetic radiation and receiving the modulated information data signal; and
(c) evaluating the received electromagnetic radiation and the information data signal for analyzing the medium.

### BRIEF DESCRIPTION OF THE FIGURES

In the following possible embodiments of the apparatus and the method according to the present invention are explained with reference to the enclosed figures.
- Figures 1A, 1B: show an apparatus for spectroscopic measurement of blood samples;
- Fig. 2: shows a block diagram of a possible embodiment of an apparatus according to the present invention for spectroscopic measurement of a medium;

- Fig. 3: shows an embodiment of an apparatus according to the present invention for spectroscopic measurement of a medium;
- Fig. 4: shows a further embodiment of an apparatus according to the present invention for spectroscopic measurement of a medium;
- Fig. 5: shows a further embodiment of an apparatus according to the present invention for spectroscopic measurement of a medium;

### DETAILED DESCRIPTION OF EMBODIMENTS

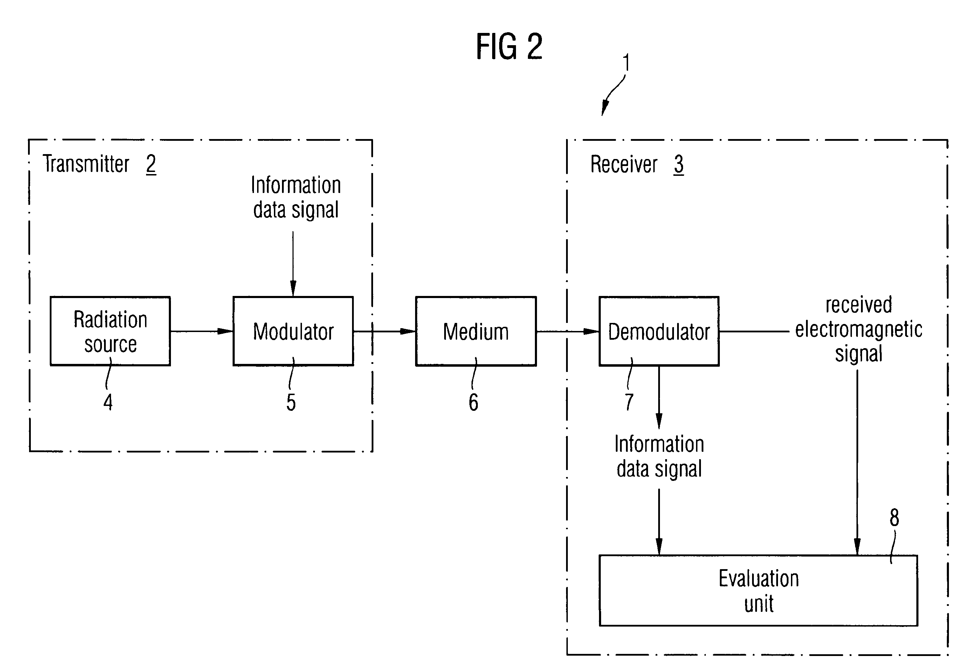

As can be seen from fig. 2 an apparatus 1 according to the present invention for spectroscopic measurement of a medium comprises a transmitter 2 and a receiver 3. The transmitter 2 comprises a radiation source 4 for generating of a first electromagnetic radiation such as a light signal. The electromagnetic radiation comprises a frequency, which in a possible embodiment is higher than 40 GHz. The generated electromagnetic radiation is modulated in a possible embodiment by a modulator 5 of the transmitter 2 with an information data signal. In a further embodiment, the emitted electromagnetic radiation is modulated directly, e. g. via the driving current of a diode laser.

In a possible embodiment, the transmitter 2 encrypts the current position of a laser spot on a sample or medium 6 in the emitted signal, such as a fluorescence signal.

The information data signal comprises in a possible embodiment data that include information indicative for the medium 6 to be investigated. In a possible embodiment an information data signal carries data that comprises information indicative for the radiation source 4 or the transmitter 2.

The modulator 5 modulates the electromagnetic radiation generated by the radiation source 4 with the information data signal. The modulation can be, for example, intensity or amplitude modulation. The amplitude of the electromagnetic signal such as light, viz. the field strength or intensity, can be modulated with On-Off-Keying (OOK) such that the medium 6 receives a first modulated electromagnetic radiation.

In response to the first electromagnetic radiation a second electromagnetic radiation is generated in the medium 6 and transmitted by the medium 6 to the receiver 3. The second electromagnetic radiation, for example a light signal, is detected by a detector, such as a photodiode, and demodulated by means of a demodulator 7 provided within the receiver 3. The demodulator 7 extracts the data signal contained in the received second electromagnetic light signal and forwards this data signal to an evaluation unit 8 within the receiver 3. The evaluation unit 8 receives two signals, i.e. the information data signal and the second electromagnetic radiation signal. The received electromagnetic radiation signal is for example evaluated spectroscopically for investigating or analyzing the medium 6. The evaluation unit 8 can be formed by a processing unit such as a microprocessor. The evaluation unit 8 receives simultaneously an information data signal belonging to the received electromagnetic radiation signal, wherein data indicative for the medium 6 or data indicative for the used transmitting radiation source 4 is included in that information data signal. In a possible embodiment the information data signal can comprise a synchronization signal.

The medium 6 to be analyzed, which is located between the transmitter 2 and the receiver 3, can be in different aggregation states. The medium 6 is, for example, a gas or a fluid. In another possible embodiment the medium 6 comprises a plasma. Further, it is possible that the medium 6 is in a solid state. By modulating the information data signal to the electromagnetic signal transmitted by the transmitter 2 to the medium 6 it is possible to associate information to the electromagnetic signal output by the demodulator 7.

If between the transmitter 2 and the receiver 3 different samples of the medium 6 are placed sequentially it is possible to input data at the transmitting side that contains information for the current sample to be investigated. This information data can, e.g., be input by means of a keyboard. The input information data signal is indicative for the respective sample and is modulated by the modulator 5 to the electromagnetic signal output by the radiation source 4. Thus it is possible to transmit different information data simultaneously or in a synchronous manner along with the first electromagnetic radiation to the medium 6 and to demodulate or extract these information data on the receiving side, wherein there is a fixed (synchronous) relation between the information data signal and the received second electromagnetic signal, which is spectroscopically evaluated by the evaluation unit 8.

For example, a user can indicate the type of medium and the person from whom a blood sample has been drawn:
medium = blood sample
patient = Smith
health insurance = Blue Shield
age = 58 years

Since a data signal is applied after its demodulation simultaneously with the received second electromagnetic signal to the evaluation unit 8 there is a fixed association or relation and an erroneous allocation is avoided. Furthermore, the evaluation unit 8 can use the additional information data for statistical calculations. For example it is possible to calculate a relation between the age of the patient and her/his blood picture.

The radiated electromagnetic signal can be any kind of electromagnetic signal having a high frequency of for example more than 40 GHz. In a possible embodiment the transmitter 2 comprises a radiation antenna and the receiver 3 comprises a reception antenna. In a possible embodiment the frequency of the first electromagnetic radiation transmitted by the transceiver 2 and the frequency of the second electromagnetic radiation output by the medium 6 to the receiver 3 are identical.

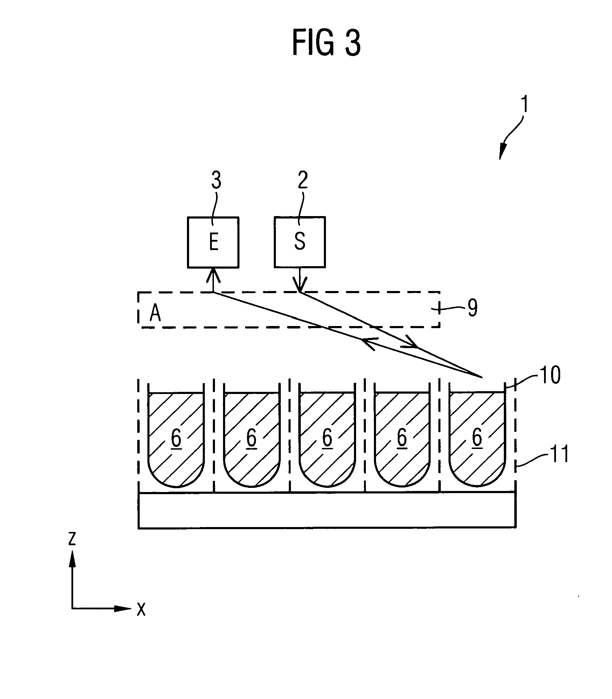

Fig. 3 shows a possible embodiment of the apparatus according to the present invention for spectroscopic measurement of a medium 6 to be investigated. In the shown embodiment the medium 6 is formed by a blood sample, which is provided together with a plurality of further blood samples in a blood sample reception array. The transmitter 2 outputs a first electromagnetic radiation such as laser light to a deflection device 9 that directs the electromagnetic radiation sequentially to the different blood samples 6. The electromagnetic radiation reflected by the blood samples 6 is received by the receiver 3. In the apparatus 1 according to the present invention as shown in fig. 3 the transmitter 2 does not only provide an electromagnetic signal but further comprises a modulator by means of which an information data signal is modulated to the electromagnetic radiation. The electromagnetic radiation that is output by the sample 6 also comprises the modulated information data signal, which is demodulated by a demodulator 7 provided within the receiver 3, and which is applied to the evaluation unit 8 along with a received electromagnetic radiation. In a possible embodiment the information data signal comprises a synchronization signal. In the embodiment shown in fig. 3 the medium 6 to be analyzed is provided in test tubes 10, which are inserted into a gridlike reception device 11. The medium 6 to be analyzed can be any kind of fluid such as a body fluid of an organism.

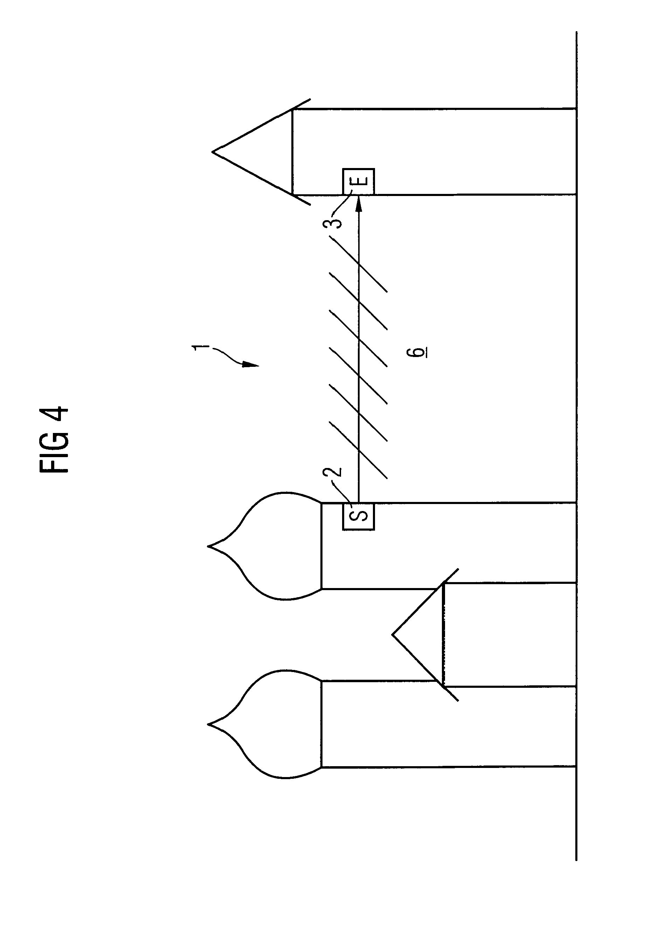

Fig. 4 shows a further embodiment of an apparatus 1 according to the present invention for a spectroscopic measurement of a medium. In the embodiment shown in fig. 4 the medium is formed by the atmosphere in an area, such as a city. A transmitter 2 is located within a tower of a first building and the receiver 3 is arranged in a tower of a second building. The transceiver 2 outputs a first electromagnetic radiation to which an information data signal is modulated to the receiver 3 via the medium 6. The medium 6 is formed by the surrounding air,
i. e. a gas mixture formed by the atmosphere. Since absorption of the atmosphere at the wavelength radiated by a laser is low it is possible to perform a measurement over a long distance more than several kilometers. By means of a spectroscopic measurement the absorption of the light at different wavelengths is analyzed at the receiving side by means of an evaluation unit provided within the receiver 3. Simultaneously with the spectroscopic measurement the amplitude of the light can be modulated, for example by on-off keying, such that a data stream is transmitted from the transmitter 2 to the receiver. In a possible embodiment the time resolution of the measurement is lower than the inverse bandwidth of the data modulation. Furthermore, in a possible embodiment the modulation bandwidth is smaller than the spectral signature to be measured. For example if the absorption line in a carbon monoxide (CO) spectrum at normal atmospheric conditions has a width of about 1.5 GHz and the laser spectrum 5 generates symmetric side bands at a distance of the modulation frequency. In the given example and in case the laser bandwidth is noticeably smaller than the spectral line width of the CO absorption line, the modulation bandwidth has to be significantly lower than 750 MHz in order not to obstruct the absorption measurement. When using amplitude modulation and if the spectroscopic measurement method is based on an intensity measurement of the transmitted light it is necessary that the measurement method, e.g. the intensity of the received signal, is not influenced by the modulation within the time scale of the measurement. This requirement is, e.g., achieved by phase modulation or by a sufficient long measurement period. The arrangement as shown in fig. 4 makes it possible to perform a long distance point-to-point measurement via a medium having a very high volume. The frequency of the electromagnetic radiation transmitted by the transmitter 2 is in a possible embodiment adjustable. The higher the frequency of the transmitted electromagnetic radiation the more the electromagnetic radiation has optical properties, i. e. it is easier to bundle or focus the signal. In a possible embodiment the transmitted electromagnetic radiation has a frequency of more than 40 GHz. In a possible embodiment a measurement of the oxygen within the atmosphere is performed at a frequency range of around 60 GHz.

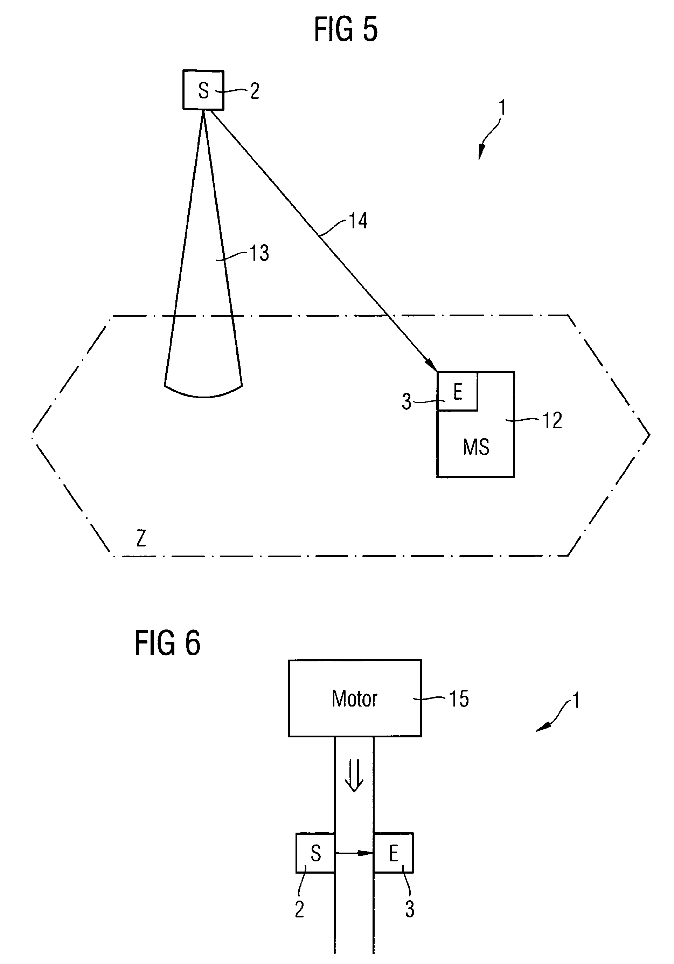

Fig. 5 shows a further embodiment of an apparatus according to the present invention for spectroscopic measurement of a medium. In the embodiment shown in fig. 5 the receiver 3 is provided within a mobile device 12 of a user. The mobile device 12 can be a mobile telephone. In the embodiment shown in fig. 2 the transmitter 2 is provided within a base station 13 of a cellular radio network. The transmitter 2 transmits an electromagnetic radiation via a downlink 14 to the receiver 3 of the mobile device 12. Along with the electromagnetic signal a modulated information data signal is sent to forward information data providing information about the radiation source or the surrounding. In an alternative embodiment the transmitter 2 is provided within the mobile device 12 and the receiver 3 is located at the base station 13. The electromagnetic signal modulated with the information data signal is transmitted by the transmitter 2 to the receiver 3. The received signals can, for example be analyzed to evaluate atmospheric conditions within a cell Z of the cellular network.

The apparatus 1 according to the present invention can be used in a wide range of applications. For example, the transmitter 2 can be arranged in a mobile device such a transport device. In a further embodiment both the transmitter 2 and the receiver 3 are arranged in mobile devices. Between the transmitter 2 and the transmitter 3 a medium is provided, which can have any kind of aggregate state.

In a possible embodiment both the transmitter 2 and the receiver are provided within the same housing wherein the receiver 3 evaluates for example light reflected by the medium 6. A data signal modulated to the first electromagnetic radiation can be applied by the modulator 5 in different ways. In a possible embodiment the information data signal is input by an input device such as a keyboard. In an alternative embodiment the information data signal is output by sensors or detectors such as a tachometer to the modulator 5. In a further possible embodiment the information data signal is output by a sensor that detects the type of the medium 6.

In a possible embodiment a plurality of transmitters and receivers can form a network that comprises several sections to be measured. For example, a plurality of transceivers can be distributed in the area of a city, wherein each transceiver comprises a transmitter 2 and a receiver 3. The information data modulated by a transmitter 2 to the electromagnetic radiation can comprise an identification or location of the respective transmitter 2. The receiver 3 of a receiving transceiver forwards the information data signal for further evaluation.

The radiation source 4 of the transmitter 2 can be any kind of radiation source for transmitting electromagnetic waves such as a laser, a light-emitting diode, an antenna, or any other kind of high frequency electromagnetic source. In a possible embodiment, the second electromagnetic radiation generated by the medium 6 can comprise the same frequency as the first electromagnetic radiation. In an alternative embodiment the electromagnetic radiation induced in the medium 6 can have a different frequency than the first electromagnetic radiation received by medium 6.

The invention further provides a method for spectroscopic measurement of a medium to be investigated or analyzed.

In a first step S1 a first electromagnetic radiation is transmitted to the medium 6, wherein an information data signal is modulated to the first electromagnetic radiation.

In a further step S2 a second electromagnetic radiation is received by a receiver from the medium 6, wherein the second electromagnetic radiation is generated within the medium 6 to be analyzed in response to the first electromagnetic radiation. In this step also the modulated data signal is received.

In a further step S3 the received second electromagnetic radiation and the demodulated information data signal are evaluated or processed for analyzing the medium 6.

In a possible embodiment the method according to the present invention is performed under the control of a control program. The control program can be executed for example by a control device. The control device can be formed by a microprocessor. The microprocessor executes the control program, which is stored on a data carrier. In a possible embodiment the control instructions of the control program are stored in a replaceable data carrier.

## Claims

1. An apparatus for spectroscopic measurement of a medium (6) comprising:
(a) at least one transmitter (4) for transmitting a first electromagnetic radiation to said medium (6), wherein an information data signal is modulated on said electromagnetic radiation;
(b) at least one receiver (3) for reception of a second electromagnetic radiation from said medium (6), where the second electromagnetic radiation is generated in response to the first electromagnetic radiation in said medium (6) and for reception of the modulated information data signal;
(c) wherein said receiver (3) comprises a data processing unit (8) for evaluating said second electromagnetic radiation and said information data signal.

2. The apparatus according to claim 1,
wherein the electromagnetic radiation comprises a frequency of more than 40 GHz.

3. The apparatus according to claim 1,
wherein the medium (6) is a fluid.

4. The apparatus according to claim 3,
wherein the medium (6) is a body fluid of an organism.

5. The apparatus according to claim 4,
wherein the body fluid is blood.

6. The apparatus according to claim 1,
wherein the medium (6) is a gas.

7. The apparatus according to claim 1,
wherein the medium (6) is a gas mixture such as air.

8. The apparatus according to claim 1,
wherein the medium (6) comprises a plasma.

9. The apparatus according to claim 1,
wherein the medium (6) is a solid state body.

10. The apparatus according to claim 1,
wherein the information data signal transmits information data indicative of the medium (6) to be analyzed.

11. The apparatus according to claim 1,
wherein the information data signal transmits information data indicative for a radiation source (4) or the transmitter (2).

12. The apparatus according to claim 1,
wherein the information data signal comprises a synchronization signal.

13. The apparatus according to claim 1,
wherein a modulator (5) is provided that modulates the information data signal on the first electromagnetic radiation.

14. The apparatus according to claim 1,
wherein a demodulator (7) is provided that demodulates the second received electromagnetic radiation for extracting the information data signal.

15. The apparatus according to claim 1,
wherein the first and the second electromagnetic radiation have the same center frequency.

16. The apparatus according to claim 1,
wherein the radiation source and/or the detector are provided in a mobile device.

17. The apparatus according to claim 1,
wherein the first electromagnetic radiation is intensity modulated, e.g. by a modulator (5), with the information data signal.

18. The apparatus according to claim 1,
wherein the first electromagnetic radiation is amplitude modulated, e.g. by a modulator (5), with the information data signal.

19. The apparatus according to claim 1,
wherein the first electromagnetic radiation is polarization modulated, e.g. by a modulator (5), with the information data signal.

20. The apparatus according to claim 1,
wherein the first electromagnetic radiation is phase modulated, e.g. by a modulator (5), with the information data signal.

21. The apparatus according to claim 1,
wherein the first electromagnetic radiation is frequency modulated by a modulator (5) with the information data signal.

22. A method for spectroscopic measuring of a medium (6) comprising the steps of:
(a) transmitting a first electromagnetic radiation to a medium (6), wherein a data signal is modulated onto said first electromagnetic radiation;
(b) receiving a second electromagnetic radiation from the medium (6) that is generated in the medium (6) in response to the first electromagnetic radiation and receiving the modulated information data signal; and
(c) evaluating the received electromagnetic radiation and the information data signal for analyzing the medium (6).

23. A computer program having instructions for performing the method according to claim 22.

24. A data carrier for storing a computer program according to claim 23.
